# DEMANDE DE BREVET EUROPEEN

(11) **EP 0 920 175 A2**
(43) Date de publication de la demande: **02.06.1999**
(21) Numéro de dépôt: 98500243.5
(22) Date de dépôt: 11.11.1998
(51) Int. Cl.: H04M 3/50, H04M 3/30, H04M 3/36

(54) **Système de télémonitorage de lignes téléphoniques**

(30) Priorité: 27.11.1997 ES 9702480
(71) Demandeur: Urresti Garcia, Jon, 01005 Vitoria (Alava) (ES); Iglesias Pimentel, Santiago Luis, 48910 Sestao (Vizcaya) (ES)
(72) Inventeur: Urresti Garcia, Jon, 01005 Vitoria (Alava) (ES); Iglesias Pimentel, Santiago Luis, 48910 Sestao (Vizcaya) (ES)
(74) Mandataire: Urizar Barandiaran, Miguel Angel

(57) **Abrégé**

Système de télémonitorage de lignes téléphoniques, se composant d'un concentrateur de lignes téléphoniques qui réunit toutes les lignes dédiées à des démarches et à une ligne ou plus dédiées au télémonitorage; une carte logique, basée sur microprocesseur connectée à un ordinateur personnel au moyen d'un modem; un équipement électronique basé sur un microcontrôleur à interface téléphonique et d'audio ainsi qu'une trame de messages à voix humaine enregistrée en EPROM et des moyens pour contrôler / réguler aussi bien le temps de monitorage de chaque appel entrant que le fonctionnement général du système.

Application pour monitorer, en temps réel ou enregistré, des lignes téléphoniques dédiées à des démarches diverses, servant soit à recevoir des appels, soit à les réaliser.

## Description

La présente invention traite d'un système de télémonitorage de lignes téléphoniques qui donne une solution au besoin de contrôler, en temps réel ou enregistré, les lignes téléphoniques dédiées aux enquêtes, à la télévente ou au marketing téléphonique, à la publicité assistée, aux services aux clients ou à des applications similaires. On parlera ci-après de manière plus générique de "démarches effectuées à travers la ligne téléphonique" ou tout simplement de "démarches" pour telle ou telle des tâches du type décrit ci-dessus où le système s'avère applicable selon l'invention.

Conventionnellement, une série d'opérateurs/trices prennent en charge les tâches de type ci-dessus en utilisant les lignes téléphoniques, soit lorsqu'elles reçoivent des communications soit lorsqu'elles les réalisent. A partir de l'information obtenue, on arrive à des conclusions qui donnent forme, dans chaque cas, au rapport résultant de l'étude.

Le système selon l'invention, offre la possibilité, dans les tâches du type cité ci-dessus, d'écouter les conversations au moment même où elles se réalisent, à distance, à travers la ligne téléphonique :
Il se caractérise en ce qu'il se compose de :
a) un concentrateur de lignes téléphoniques réunissant toutes les lignes dédiées aux démarches et une ligne ou davantage dédiées au télémonitorage;
b) une carte logique, basée sur un microprocesseur raccordé à un ordinateur personnel au moyen d'un modem;
c) un équipement électronique basé sur un microcontrôleur doté d'un interface téléphonique et d'audio ainsi qu'une trame de messages à voix humaine enregistrés en EPROM;
d) des moyens pour contrôler/ réguler aussi bien le temps de monitorage de chaque appel entrant que le fonctionnement général du système.

La carte logique peut opérer de façon autonome ou en mode esclave.

L'équipement électronique est monté dans une caisse métallique qui contient au plan interne une seule carte électronique avec tous les composants du système et présente au plan externe aussi bien une base de connexion de réseau et de porte-fusibles comme la/les base(s) de connexion pour lignes téléphoniques et les indicateurs correspondants d'état de ligne active, monitorée par l'unité centrale ou en liaison par la ligne de test.

Pour des raisons légales en dehors du champ de l'invention :
- Les lignes à monitorer sont toujours des lignes appartenant en propre.
- Les appels sont émis à partir des lignes monitorées.
- Le monitorage se réalise sur la partie de l'installation téléphonique appartenant à l'entreprise qui offre le service.

Le système, selon l'invention, est complètement transparent aux lignes monitorées, il n'altère pas l'impédance et la liaison en audio se réalise en mode unidirectionnel au moyen d'un filtre à impédance élevée.

Les lignes de monitorage ne permettent que l'écoute, elles ne permettent jamais de moduler la ligne testée.

Le système a la capacité de décrocher la ligne de monitorage quand il appelle et de déconnecter par temps ou par fin d'appel.

Il scanne chaque ligne soumise à monitorage et détecte si elle est opérationnelle ou non à tout moment.

La communication étant établie, il échantillonne la ligne correspondante, à son tour ou de manière aléatoire, si cette ligne raccroche il passe à la suivante, à son tour, ou à une autre en mode aléatoire.

Le temps de communication peut être déterminé à partir du système, la déconnexion se produisant après que se sera écoulé un temps déterminé, à moins de le maintenir indéfiniment à merci de l'appel entrant de consultation.

Pour mieux comprendre l'objet de la présente invention, on représente sur les plans une forme préférentielle de réalisation pratique, susceptible de changements accessoires qui n'en détournent guère le fondement.

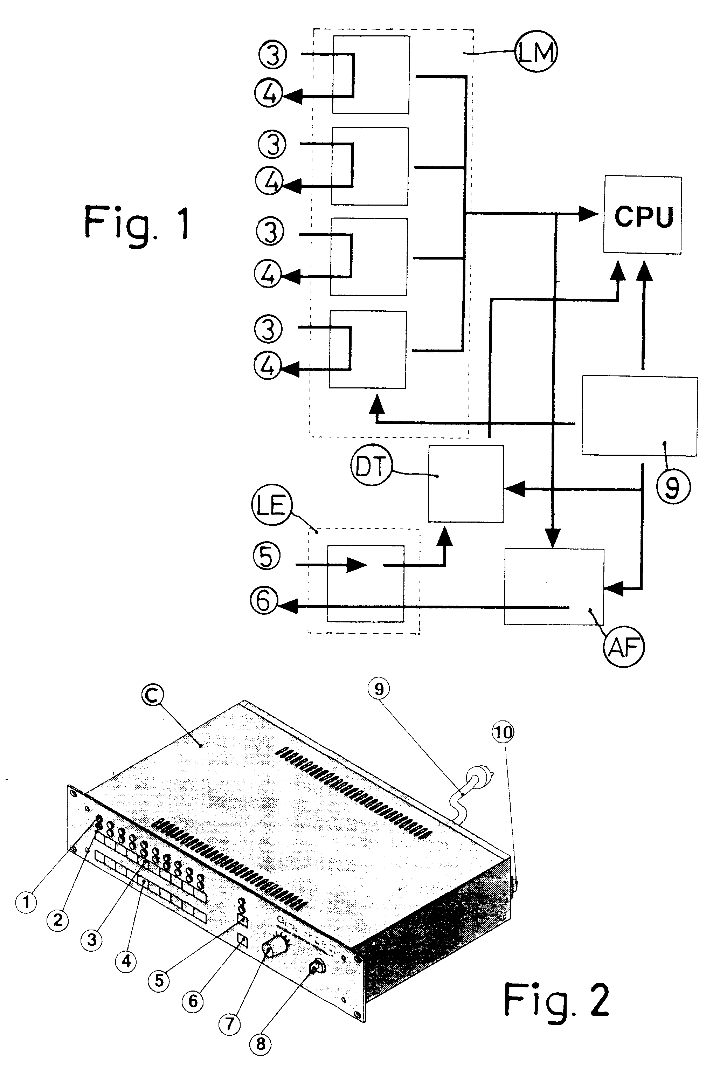

La figure 1 montre le diagramme de blocs du système de télémonitorage de lignes téléphoniques selon l'invention, avec ses composants de base et l'interconnexion entre eux.

La figure 2 représente le boîtier métallique (C) et ses composants externes, pour un exemple - non limitatif - de réalisation pratique.

Sur les deux figures, on trouvera signalées les particularités suivantes :
C.- Caisse métallique.
1.- Afficheur à led d'échantillonnage.
2.- Afficheur à led de test.
3.- Connecteur opérateur.
4.- Connecteur ligne opérateur.
5.- Connecteur ligne test.
6.- Connecteur extension test.
7.- Réglage raccrocher.
8.- Interrupteur principal.
9.- Alimentation.
10. Fusible.
Unité centrale.- Carte logique.
LM.- Lignes soumises à monitorage.
LE.- Ligne d'écoute.
AF.- Amplificateur de sortie.
DT.- Détection d'appel.

On trouvera décrit ci-après un exemple de réalisation pratique, non limitative, de la présente invention.

Le système selon l'invention résout le besoin de monitorer en temps réel les lignes téléphoniques dédiées à des démarches du type de celui décrit plus haut.

Pour résoudre ce besoin selon l'invention trois solutions sont envisagées :

### - SYSTEME LOGIQUE

Consistant en un équipement électronique qui supporte les fonctions suivantes :
- Décroche ligne entrante de consultation (LE).
- Assure le monitorage d'une des lignes (LM) d'enquête.
- Coupe la communication par temps (réglable, par exemple, entre 15 et 150 secondes).
- Chaque appel montre la ligne suivante.

Incrémente cycliquement.
- Lignes d'entrée : (LE)
- Lignes soumises à monitorage : (LM)

### - SYSTEME INTELLIGENT

Equipement électronique basé sur un contrôleur de la famille 8031, à interface téléphonique et audio, banque de messages à voix humaine enregistrés en EPROM.

L'équipement résout les fonctions suivantes :
- Il décroche la ligne entrante de consultation (LE).
- Il reproduit des messages menu des lignes opérationnelles.
- Il permet de sélectionner la ligne (LM) à soumettre à monitorage au moyen du cadran du téléphone.
- Enregistrement de consultations réalisées, avec référence de jour et d'heure.

Temps illimité de monitorage.

Coupe la communication lorsque le terminal en train d'appeler raccroche.
- Lignes d'entrée (LE) : une
- Lignes soumises à monitorage (LM) : jusqu'à 16.
- Contrôle par tonalités DTMF.

### - SYSTEME BASE SUR ORDINATEUR PERSONNEL

Equipement configuré à partir d'une structure PC, à carte de modem, support de phonie et application spécifique pour la gestion des appels entrants, qui support les prestations suivantes :
- Décroche ligne entrante de consultation (LE).
- Monitore et sélectionne les lignes (LM) d'enquête, au moyen du cadran téléphonique.
- Enregistre fichier avec lignes et date/heure des consultations réalisées.
- Lignes d'entrée (LE) : une
- Lignes soumises à monitorage (LM) : jusqu'à 256
- Messages sortants personnalisables à partir de PC.
- Temps de monitorage : jusqu'à raccrochement ligne .

### - CONFIGURATION GENERALE

Equipement électronique monté dans boîtier métallique (C) de 430 x 85 x 260 pour rack de 19".

Au plan interne, il contient une seule carte électronique de 120 x 240 millimètres, avec tous les composants du système.

Au plan externe, il présente, dans sa partie postérieure, une base de connexion de réseau (9) - source d'alimentation - et porte-fusibles (10).Sur le devant il présente deux rangées de bases de connexion pour dix lignes téléphonique (3), (4), et une autre de plus, identifiée comme "test" (5), (6). Il existe sur chaque base de connexion deux afficheurs à led (1), (2), un sur l'autre, celui du bas de couleur verte s'allume quand la ligne est active, celui du haut de couleur rouge, indique quand cette ligne est monitorée par l'unité centrale, ou que la liaison est établie avec la ligne de test (5), (6).

Les afficheurs à led sur la ligne de test (5), (6) indiquent : le vert chaque tonalité d'appel de la ligne de test, le rouge quand la connexion s'est produite.

La commande (7), située près de cette ligne, permet de réguler le temps de monitorage pour chaque appel entrant.

A l'extrémité à droite se trouve l'interrupteur général (8), qui est actionné par une clef.

### - FONCTIONNEMENT

L'équipement étant raccordé au réseau électrique (9) et son interrupteur (8) étant actionné, les leds supérieurs (1) (rouges) s'allument séquentiellement en même temps qu'est sondée chacune des lignes (LM) connectées au système.

Quand il se produit un appel sur la ligne de test (LE), cet appel est détecté et il se produit l'effet de décrocher la ligne, en même temps que se trouve établie la liaison avec le signal présent sur la ligne monitorée qui sera la première à présenter un signal de porteuse (actif). Lors de l'appel suivant, la ligne monitorée (LM) sera la suivante présentant de l'activité, la précédente passant à un rang de priorité inférieur. Toutes les lignes (LM) présentant de l'activité, face à des appels de test continus (LE), seront toutes de la sorte monitorées séquentiellement.

Au cas où durant un appel de test, une fois le lien établi avec une ligne, celle-ci se trouvant monitorée, si cette ligne cesse d'avoir de l'activité, le monitorage passe à la ligne suivante.

S'il se produit un appel de test, et s'il n'y a d'activité sur aucune ligne, il se produit l'établissement d'un lien séquentiel avec chaque ligne, jusqu'à ce que l'une d'elle présente de l'activité, pour s'y arrêter.

Une fois la connexion établie entre la ligne de test (LE) et l'une des lignes soumises à monitorage (LM) un temporisateur réglable à partir de la commande de la partie frontale (7) se met en marche. Le temps s'étant écoulé, l'appel se "raccroche", et ainsi prend fin le cycle de monitorage.

Si l'on souhaite poursuivre le monitorage, il sera nécessaire de rappeler.

### - MONITORAGE

La ligne de test (LE), au repos, est connectée directement à un circuit de détection d'appel (DT), à impédance élevée, de sorte que si l'équipement n'est pas alimenté électriquement (9), il ne se passe rien, et l'appel est donné comme sans réponse.

Dans des conditions de travail, l'appel de test (LE) active la connexion de cette ligne à la sortie d'un amplificateur (AF) au moyen d'un transformateur à isolement.

L'amplificateur (AF) conditionne le signal pour obtenir des conditions optimales d'écoute.

La liaison se produit dans une seule direction. De la sorte, l'appel de test (LE) ne perturbe pas la connexion existante sur la ligne monitée (LM). Autrement dit, la ligne de test (LE) peut simplement écouter, mais pas parler.

## Revendications

1. Système de télémonitorage de lignes téléphoniques, se caractérisant en ce qu'il se compose de :
a) un concentrateur de lignes téléphoniques réunissant toutes les lignes dédiées à des démarches et à une ligne ou plus dédiées au télémonitorage;
b) une carte logique, basée sur microprocesseur et connectée à un ordinateur personnel au moyen d'un modem;
c) un équipement électronique basé sur un microprocesseur équipé d'interface téléphonique et d'audio ainsi que d'une trame de messages à voix humaine enregistrés en EPROM.
d) moyens pour contrôler/réguler aussi bien le temps de monitorage de chaque appel entrant comme le fonctionnement général du système.

2. Système de télémonitorage de lignes téléphoniques, selon revendication antérieure, se caractérisant en ce que la carte logique peut opérer de manière autonome ou en mode esclave.

3. Système de télémonitorage de lignes téléphoniques selon revendications antérieures, se caractérisant en ce que l'équipement électronique est monté dans un boîtier métallique qui au plan interne contient une seule carte électronique avec tous les composants du système et au plan externe présente aussi bien une base de connexion de réseau et de porte-fusibles comme la/les base(s) de connexion pour lignes téléphoniques et les afficheurs correspondants d'état de ligne active, monitorée par l'unité centrale ou la liaison étant établie par la ligne de test.
